# EUROPEAN PATENT APPLICATION

(11) **EP 4 823 011 A1**
(43) Date of publication of application: **14.10.2026**
(21) Application number: 25170220.5
(22) Date of filing: 11.04.2025
(51) Int. Cl.: H04B 10/077

(54) **OPTICAL MONITORING**

(71) Applicant: Aegiq Ltd, Sheffield S1 2NS (GB)
(72) Inventor: LYONS, Thomas Patrick, Sheffield, S1 2NS (GB); HORNER, Matthew Donald, Sheffield, S1 2NS (GB)
(74) Representative: Mathys & Squire

(57) **Abstract**

The present invention relates to a system and method for detecting a disturbance in an optical monitoring signal. The system comprises a transmitter and a receiver. The receiver comprises a polarising beam splitter and at least one photodetector. The transmitter is configured to emit an optical monitoring signal along an optical channel to the receiver. The polarising beam splitter is configured to decompose the optical monitoring signal into two orthogonally polarised components. The at least one photodetector is configured to determine, for each of the two orthogonally polarised components, at least one parameter relating to an amplitude or intensity of the components thereby to detect a disturbance in the optical monitoring signal.

## Description

### Field of Invention

This invention relates to optical monitoring. More specifically, the invention relates to detecting a disturbance in an optical monitoring signal transmitted along an optical channel.

### Background

Optical channels, such as optical fibres, are susceptible to malicious and non-malicious disturbances. A malicious disturbance may be, for example, an eavesdropping attack on the optical channel. A non-malicious disturbance may be, for example, environmental disturbances of the optical channel, such as movement of the ground in which an optical fibre is buried, or fault-related disturbances of the optical channel, such as a degradation of the channel itself or a connection along the channel.

Detecting malicious disturbances is important to ensure secure communication over the optical channel. Detecting non-malicious disturbances can enable improved maintenance of the optical channel and therefore improved operational performance.

### Summary of the Invention

Aspects of the invention are set out in the independent claims and optional features are set out in the dependent claims. Aspects of the disclosure may be provided in conjunction with each other and features of one aspect may be applied to other aspects.

In one aspect there is provided a system comprising: a transmitter; and a receiver comprising a polarising beam splitter and at least one photodetector, wherein: the transmitter is configured to emit an optical monitoring signal along an optical channel to the receiver; the polarising beam splitter is configured to decompose the optical monitoring signal into two orthogonally polarised components; and the at least one photodetector is configured to determine, for each of the two orthogonally polarised components, at least one parameter of the components thereby to detect a disturbance in the optical monitoring signal.

The at least one parameter may relate to an amplitude or intensity of the two orthogonally polarised components. This includes parameters relating to the amplitude or intensity of just one part of the orthogonally polarised components of the optical monitoring signal, such as the amplitude or intensity of the constant part or a fluctuating part of each orthogonally polarised component of the optical monitoring signal (which are respectively analogous to the direct current (DC) and alternating current (AC) components of an electrical signal). The parameter may be a raw measurement from the photodetectors, or it may be a metric derived from the measurements of the photodetectors.

The transmitter may comprise a light source to generate the optical monitoring signal. The light source may be configured to generate a gaussian state of light for the optical monitoring signal, such as a coherent state of light. The light source may be a laser, such as a continuous wave laser.

Advantageously, by decomposing the optical monitoring signal into two orthogonally polarised components, and using photodetectors to determine a parameter for each of the two orthogonally polarised components, it is possible to monitor the optical monitoring signal for disturbances which are indicative of malicious interference with the optical channel (e.g., an eavesdropping attack on the optical channel to obtain data that might be transmitted along the channel together with the optical monitoring signal) or non-malicious disturbances of the optical channel (such as movement of the channel or a fault on the channel). This may involve monitoring the parameter itself, such as monitoring for changes in the parameter over time, or this may involve monitoring one or more metrics derived from the parameter, such as monitoring for changes in the metrics over time.

The transmitter may be configured to apply a modulation to the optical monitoring signal. For example, the transmitter may comprise a modulator configured to apply a modulation to the optical monitoring signal, or the light source of the transmitter may be configured to modulate the intensity of the light it emits. The modulator may be, for example, an amplitude modulator configured to modulate the amplitude or intensity of the optical monitoring signal. The modulation of the optical monitoring signal enables the system to imprint a modulation sequence into the optical monitoring signal, such as a sequence of high and low intensity states (e.g., in the form of a sinusoidal oscillation in the signal between the high and low states). The parameter determined using the photodetectors may therefore be a parameter relating to measurements of the high and low intensity states as they are received at the receiver. Comparing the transmitted versus received modulation sequence enables a determination to be made in relation to the correlations between the transmitted and received modulation sequences, from which metrics can be derived that provide insights into potential disturbances of the optical monitoring signal.

The modulation may be a random modulation. A random modulation provides further protection against sophisticated eavesdropping attacks where the eavesdropper might remove some light from the optical channel (to intercept the data carried by the light) and inject replacement light into the channel to cover the attack. However, as the eavesdropper cannot predict a random modulation sequence in real time, they cannot modulate the light they inject to mimic the original signal. As a result, the light injected by the eavesdropper will be uncorrelated with the original light emitted by the transmitter, which can be detected by comparing the transmitted and received modulation sequences.

In either the case of a random or non-random (e.g., periodic or repeated) modulation sequence, the at least one parameter may comprise a parameter relating to the amplitude or intensity of the modulation of the two orthogonally polarised components. This refers to the measurement of just the magnitude of the modulation of the light (e.g., the magnitude of the high states and low states, relative to a baseline value). This might involve measuring just the amplitude or intensity of the fluctuating part (i.e., the AC part) of each orthogonally polarised component of the optical monitoring signal, for example by measuring the total amplitude or intensity of each of the orthogonally polarised component and subtracting the amplitude or intensity of the constant part (i.e., the DC part) to isolate just the fluctuating part.

The transmitter may be configured to emit the optical monitoring signal along the optical channel in an unpolarised or randomly polarised state. Alternatively, the transmitter may be configured to emit the optical monitoring signal along the optical channel in an elliptically polarised or circularly polarised state.

The optical channel may be a free-space channel, or the optical channel may be an optical fibre. In the latter case, the optical fibre may be part of an existing fibre-optic network configured to carry data through the network.

The system may comprise an optical time-domain reflectometer (OTDR). The OTDR may be provided as part of the transmitter or provided separately from the transmitter. The OTDR may be configured to emit one or more pulses of light into the optical fibre and to detect light backscattered or reflected from the optical fibre. The backscattered or reflected light can be used to identify features of the optical channel, such as a splices, connections, and defects in an optical fibre. Using time of flight measurements, the OTDR can be used to determine the location of these features in the optical channel. The OTDR may be configured to emit the one or more pulses of light at regular time intervals. Alternatively, or additionally, to the regular pulses, the OTDR may be configured to emit the one or more pulses of light based on the determined at least one parameter. In this way, the OTDR pulses can be triggered by the detection of a possible disturbance of the optical monitoring signal, such that the OTDR can be used to identify the location of the possible disturbance on the optical channel.

The transmitter and receiver may be comprised in a single device. Alternatively, the transmitter and receiver may be comprised in separate devices. In either case, the transmitter device, receiver device, or combined transmitter and receiver (transceiver) device may be referred to as an optical monitoring device. The transmitter may be located at one end of the optical channel, and the receiver may then be located at the other end of the optical channel.

The optical channel may comprise a signal returner to return the optical monitoring signal to the receiver. In particular, where the transmitter and receiver are comprised in a single transceiver device located at one end of the optical channel, the signal returner may be located at the other end of the optical channel. For example, the optical channel may be a duplex or dual-core (or, more generally, a multi-core) simplex optical fibre, such that the transceiver device is configured to transmit the optical monitoring signal along one of the duplex fibres or one of the cores of the multi-core fibre, and the signal returner is configured to return the signal along the other one of the duplex fibres or another one of the fibre cores to the transceiver. The signal returner may be a loopback, such as a fibre optic loopback. This is particularly useful in cases where the optical channel is a duplex or dual/multi-core optical fibre. Alternatively, the signal returner may be a reflector, such as fibre Bragg reflector. This is particularly useful in cases where the optical monitoring signal is sent and returned along the same fibre or fibre core (for example where the optical channel comprises at least a portion that is a single core simplex optical fibre).

In another aspect there is provided a fibre-optic network comprising a plurality of nodes connected by a plurality of optical fibres, wherein the network, preferably each node of the network, comprises a system as aforementioned. For example, each node of the network may comprise a system as aforementioned. In this case, the transmitter and receiver may be located at the node, and the optical channel may be one of the plurality of optical fibres of the network which originate or terminate at the node. The fibre-optic network may be configured to transmit data (e.g., such as ethernet data, or quantum key distribution data) over the optical fibres between the nodes along with the optical monitoring signal, for example the data and the optical monitoring signal may be transmitted in different wavelength channels, or otherwise multiplexed together. In this way, the system of the present disclosure can in effect be retrofitted to an existing fibre-optic network, by coupling the transmitter and receiver to an existing fibre-optic channel of the network to form the system of the disclosure.

In another aspect there is provided a method comprising: transmitting an optical monitoring signal along an optical channel; receiving the optical monitoring signal at a receiver; decomposing, using a polarising bream splitter at the receiver, the optical monitoring signal into two orthogonally polarised components; and determining, using at least one photodetector, at least one parameter for each of the two orthogonally polarised components, thereby to detect a disturbance in the optical monitoring signal. The above description of the system applies correspondingly to this method. For example, the parameter may relate to an amplitude or intensity of the two orthogonally polarised components as described above in relation to the system. The step of transmitting may involve use of a transmitter having any features of the transmitter described in relation to the system above, and the step of receiving may involve use of a receiver having any features of the receiver described in relation to the system above.

The method may comprise calculating, using the determined at least one parameter, a transmission metric. The transmission metric may relate to the proportion of the transmitted optical monitoring signal (either the proportion of the entire signal, or the proportion of the constant part or fluctuating part as described above) that is received by the receiver - that is, the amount of the original optical monitoring signal, which was generated and transmitted by the transmitter, that has arrived at the receiver. The transmission metric may be based on correlations between the transmitted optical monitoring signal and the received optical monitoring signal, in particular the transmission metric may relate to the strength of the correlations between the transmitted optical monitoring signal and the received optical monitoring signal. The correlations may be based on correlations between the modulation sequence (as described above) of the transmitted and received optical monitoring signal.

The method may comprise calculating, using the determined at least one parameter, an excess noise metric. The excess noise metric may relate to the noise above shot noise. For example, the excess noise metric may relate to the noise of the quadratures of the optical monitoring signal above shot noise. The excess noise metric may be based on the lack of correlations between the transmitted optical monitoring signal and the received optical monitoring signal. In particular the excess noise metric may relate to uncorrelated light (that is, light that is not correlated with the optical monitoring signal generated and transmitted by the transmitter) received at the receiver.

The method may comprise calculating, based on the determined at least one parameter, a polarisation state metric. The polarisation state metric may relate to the relative amplitudes or intensities of the two orthogonally polarised components. For example, the polarisation state metric may be a measure of the proportion of the optical monitoring signal polarised in one direction (relative to the axis of the polarising beamsplitter) compared to the proportion of the optical monitoring signal polarised in an orthogonal direction (relative to the axis of the polarising beamsplitter).

Calculating the metric may comprise calculating a covariance matrix based on a first vector representing a series of intensities of the optical monitoring signal as transmitted along the optical channel and a second vector representing the same series of intensities of the optical monitoring signal as received at the receiver, and wherein the metric is calculated based on elements of the covariance matrix. The series of intensities represented by the vectors may be a modulation sequence imprinted on the optical monitoring signal, for example an intensity modulation sequence applied to the optical monitoring sequence by an amplitude modulator. The first vector may represent the modulation sequence of the optical monitoring signal as transmitted by the transmitter, and the second vector may represent the same modulation sequence of the optical monitoring signal as receiver by the transmitter. The covariance matrix relates to the covariance of these two vectors (e.g., how closely the two vectors correlate together). Lack of correlation between these two vectors indicates that the optical monitoring signal has been disturbed at some point along the optical channel between the transmitter and receiver, which is in turn indicative of a potential malicious or non-malicious disturbance of the channel. For example, a lack of correlation may indicate that some of the light making up the optical monitoring signal has been removed from the channel (e.g., by an eavesdropper tapping light from the channel) or that light has been added to the channel (e.g., by an eavesdropper adding light to replace what they have tapped) which is not correlated with the original optical monitoring signal.

The first vector may be based, at least in part, on measurements of the amplitude or intensity of at least a portion of the transmitted optical monitoring signal before it is emitted along the optical channel. The portion of the optical monitoring signal may be separated from the remainder of the optical monitoring signal using a beamsplitter. The measured amplitude or intensity may be scaled by a factor corresponding to the portion of the optical monitoring signal that is separated and measured. The scaling factor may be related to the splitting ratio of the beamsplitter. The amplitude or intensity measurement of the separated portion may be obtained using a further photodetector. The first vector may be comprised of the (optionally, scaled) amplitude or intensity measurements of the separated portion of the signal. Alternatively, the first vector may be comprised of values from a lookup table that are adjusted (e.g., scaled) based on the amplitude or intensity measurements of the separated portion of the signal.

Any of the metrics described above, and/or covariance matrix, may be calculated repeatedly based on successive portions of the optical monitoring signal. These successive portions may be temporally contiguous portions of the signal, such that every data point of the signal is used in at least one calculation of the metrics or covariance matrix. Alternatively, the successive portions of the signal may be temporally overlapping or temporally separated (i.e., intermittent) portions of the signal.

The method may comprise: determining a change in any one or more of the metrics based on a plurality of calculations of the metric(s); and issuing an alert upon determination of the change. The alert may not be notified to a user in all cases; the alert may for example not be notified to a user until further criteria are met. Alternatively, the alert may be notified to the user in all cases.

The step of determining a change in one or more of the metrics may be carried out in a variety of different ways. Similarly, the step of issuing an alert may be carried out in a variety of different ways. It should be understood that any of the ways of determining a change of the metric described below, and any of the ways of issuing an alert, may be provided in combination together.

Determining the change may comprise determining whether any one or more of the following are higher or lower than a threshold value: the calculated metric (e.g., the value of the calculated metric); a difference between the calculated metric and one or more reference values for the metric; or a parameter relating to a rate of change of the metric.

Determining the change may comprise (alternatively or additionally): calculating a weighted moving average for the metric, or for a difference between the metric and one or more reference values for the metric, based on a plurality of calculations of the metric within a time window; and determining whether the weighted moving average, or a parameter relating to a rate of change of the weighted moving average, is higher or lower than a threshold value. In this case, the calculations of the metric on which the moving average is based may be weighted in favour of more recent calculations in the time window. The weighted moving average may be an exponentially weighted moving average (for example, exponentially weighted in favour of more recent calculations in the time window). A weighted moving average in favour of more recent calculations in the time window provides a relatively sensitive measure of change in the metric, because the weighted moving average will change relatively quickly based on recent changes in the metric.

Determining the change may comprise (alternatively or additionally): calculating an equally weighted moving average for the metric, or for a difference between the metric and one or more reference values for the metric, based on a plurality of calculations of the metric within a time window that are equally weighted with respect to one another; and determining whether the equally weighted moving average, or a parameter relating to a rate of change of the equally weighted moving average, is higher or lower than a threshold value. As the calculations of the metric over which this average is calculated are equally weighted with respect to one another (i.e., an equal weighting of 1), this average may be referred to simply as an unweighted moving average since there is no relative weighting between different values of the metric over which the average is calculated. Specifically, this average may be an unweighted mean of the values of the metric within the window. This average may also be referred to as a rolling average. This equally weighted moving average will be less sensitive to sudden changes in the value of the metric, because the average takes equal account of all values in the window, such that a relatively small number of anomalous values will not significantly shift the average. This equally weighted moving average will therefore only be significantly moved by sustained changes in the metric.

In any of the cases described above, a value being higher or lower than a threshold value may include the value diverging from a baseline value by more than a threshold amount or changing by more than a threshold amount.

In any of the cases described above, the parameter relating to a rate of change of the metric, or relating to a rate of change of one of the moving averages, may be calculated based on the rate of change of two consecutive calculations of the metric or moving average (i.e., the rate of change from one calculation to the next calculation in a time-series) or the rate of change over a window of calculations of the metric or moving average (e.g., the rate of change from a first calculation to the fifth, or tenth, calculation thereafter). The parameter may be a raw calculation of the rate of change (i.e., the change between two values of the metric or moving average divided by the change in time between the two values) or the parameter may be a parameter derived from the raw rate of change, such as a parameter normalised to be in the range of 0 to 1. An example of this derived parameter may be the rate of change in the metric or moving average divided by the initial value of the metric or moving average at the beginning of the change (i.e., $\frac{dx}{x}$).

The weighted moving average and equally weighted (unweighted) moving average may be computed as described above concurrently, and an alert issued only if both averages (or parameters relating to a rate of change of both averages) are higher or lower than a threshold value at the same time, or within a time period of one another. In particular, an alert may be issued if it is determined that the equally weighted moving average, or a parameter relating to a rate of change of the equally weighted moving average, is higher or lower than a threshold value within a time period of it being determined that the weighted moving average, or a parameter relating to a rate of change of the weighted moving average, is higher or lower than a threshold value, or vice versa. The time period may be equal to the time window over which one or both of the averages is calculated.

This is advantage because the weighted moving average is sensitive to more recent changes in the metric, meaning that transient spikes in a metric could cause the weighted moving average to cross the threshold value and therefore issue a false alarm. Therefore, the equally weighted moving average, which is less sensitive to transient changes for the reasons set out above, can act as a check on the weighted moving average, such that an alert is only issued when it has been confirmed by the equally weighted moving average that the anomalous values of the metric are sustained and therefore indicative of a disturbance of the optical monitoring signal.

Determining the change may comprise determining a change in a parameter relating to the Euclidian distance between a first vector representing a plurality of calculated values for the metric and a second vector representing a plurality of reference values for the metric. References above to a difference between the calculated metric and one or more reference values for the metric may refer to this Euclidian distance parameter, or to a simple difference between the values of the first and second vectors. The first and second vectors may represent values (i.e., a string of values) for the metric over the course of a regular time period, for example over the course of a day. For example, the first and second vectors may represent values for the metric determined over the course of two consecutive days.

This enables changes in the metric to be determined relative to a dynamic or fluctuating reference rather than to a static baseline value. This is helpful for filtering out expected fluctuations in the metric, such as fluctuations from daily temperature or road traffic patterns (for optical fibres buried beneath roads), or fog or cloud for free space optical channels.

Calculating a Euclidian distance between these two vectors enables a single quantitative parameter to be calculated which represents the difference between the metric(s) over two time periods, such as over the course of two days. This quantitative parameter can be monitored over time to determine periods (e.g., days) where the correlation changes in a significant way, indicating that the fluctuations in the metric over that period were different to the fluctuations that might be expected, and therefore potentially indicative of a disturbance.

Determining the change in the parameter relating to the Euclidian distance may comprise using a Bayesian changepoint detection algorithm. The Bayesian changepoint detection algorithm may determine when a change in the Euclidian distance parameter has occurred. While a Bayesian changepoint algorithm is described here in relation to determining a change in the Euclidian distance parameter, it should be understood that such an algorithm could be used to determine the change in the metric itself, alternatively or additionally to the moving average techniques described above.

The method may comprise modifying communication over the optical channel upon detection of a change, or upon issuance of the alert. The modification of the communication may comprise: aborting communication over the optical channel (i.e., stopping communication altogether over a link that might be compromised); rerouting communication around the optical channel (e.g., via alternative routes through a communication network to allow data to reach its intended destination); or modifying the type of data communicated over the optical channel (e.g., transmitting only insensitive data over the potentially compromised link).

Embodiments of the disclosure will now be described, by way of example only, with reference to the accompanying drawings, in which:
Figures 1a and 1b are block diagrams showing exemplary hardware architectures for the system of the disclosure;
Figure 2 is a block diagram showing an exemplary hardware architecture for the system of the disclosure, when the signal returner comprises a loopback;
Figure 3 is a block diagram showing an exemplary hardware architecture for the system of the disclosure, when the signal returner comprises a reflector;
Figure 4 is a block diagram showing an exemplary hardware architecture for the system of the disclosure, when a single optical monitoring device is used to monitor multiple optical channels;
Figures 5a and 5b are block diagrams showing exemplary internal hardware architectures for the transmitter and receiver;
Figure 6 is a block diagram showing an exemplary software architecture for the system of disclosure;
Figure 7 shows three graphs which plot time-series data for the transmission metric, the excess noise metric, and the total received intensity;
Figure 8 shows two graphs relating to the calculation of a weighted moving average and the use of the weighted moving average to detect a change in a metric;
Figure 9 shows two graphs relating to the calculation of an equally weighted moving average and the use of the equally weighted moving average to detect a change in a metric;
Figure 10 shows two graphs exemplifying a two-stage alert system;
Figure 11 shows two graphs exemplifying an alert system based on the rate of change of the metric exceeding a threshold value;
Figure 12 shows three graphs exemplifying a process for detecting a change in the difference between one of the calculated metrics and one or more reference values for the metric; and
Figure 13 shows two graphs exemplifying the use of a Euclidian distance to detect a change in the metrics.

In the drawings like reference numerals indicate like elements.

### Detailed description

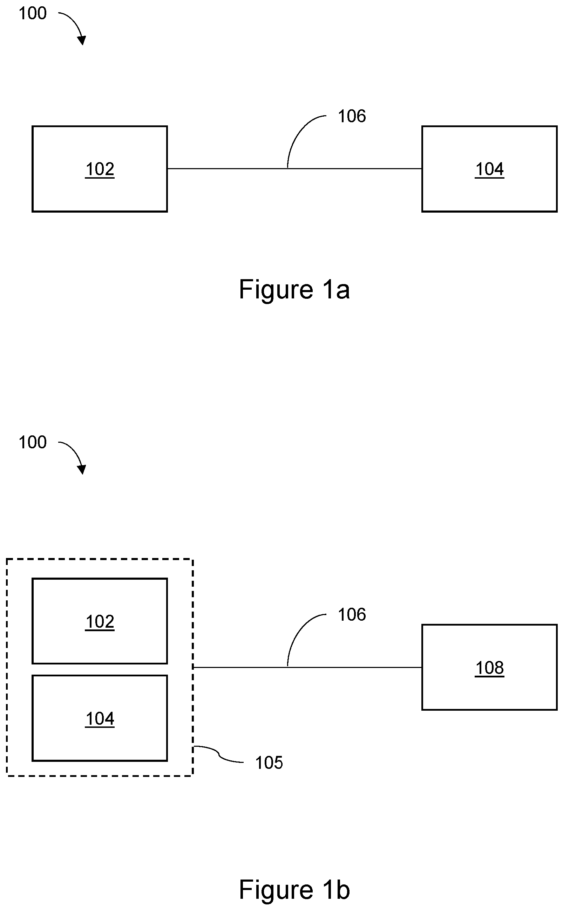

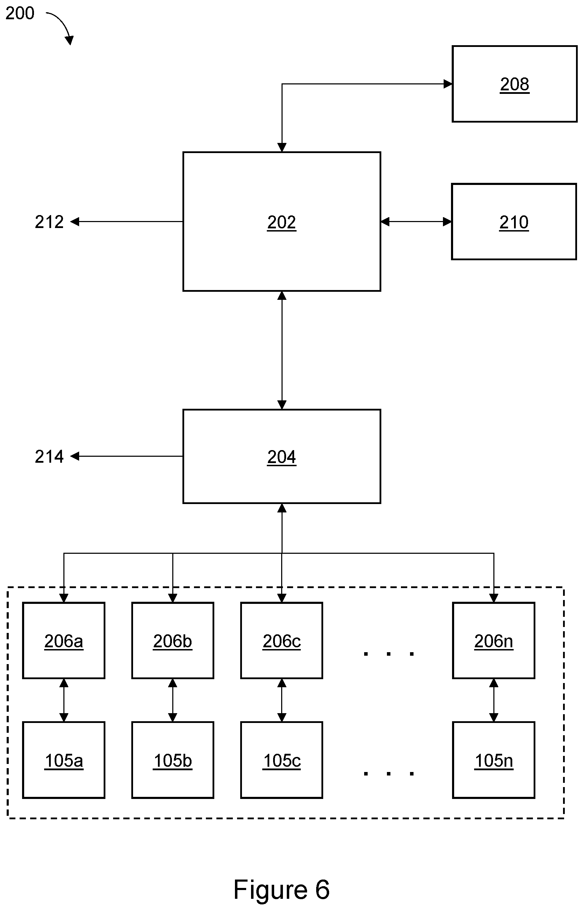

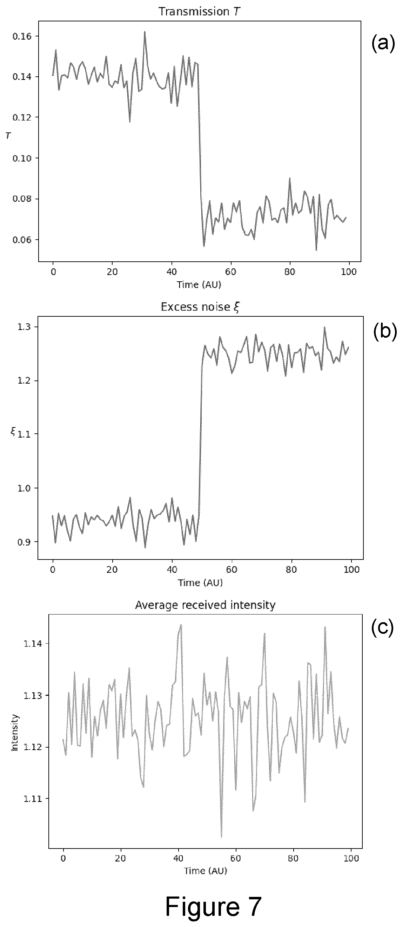

In the following description, various exemplary hardware architectures for the system of the disclosure are described with reference to Figures 1 to 5b. An exemplary software architecture for the system is described with reference to Figure 6. Techniques for detecting disturbances are then described with reference to Figures 7 to 13.

### Hardware architecture

Figures 1a and 1b are block diagrams showing exemplary hardware architectures for the system 100 of the disclosure. The system 100 includes a transmitter 102 and a receiver 104. The transmitter 102 is configured to emit an optical monitoring signal along an optical channel 106 to the receiver. In these examples, and in the following examples, the optical channel 106 is described as an optical fibre. However, in other examples the optical channel may be a free-space channel.

In the example shown in Figure 1a, the transmitter 102 and receiver 104 are located at different (opposite) ends of the optical channel 106. The transmitter and receiver and may be located at different physical locations, such as at different nodes of a geographically distributed fibre-optic network. In the example shown in Figure 1a, the optical channel 106 may be a simplex optical fibre, enabling direct transmission of the optical monitoring signal from the transmitter 102 at one end of the simplex optical fibre to the receiver 104 at the other end of the simplex optical fibre.

In the example shown in Figure 1b, the transmitter 102 and receiver 104 are located at the same physical location, as indicated by the dashed box. For example, the transmitter and receiver may be located at the same node of a fibre-optic network. In this particular example, the transmitter and receiver are comprised in a single monitoring device 105 which therefore acts as a transceiver, capable of emitting the optical monitoring signal along an optical channel and then receiving the returned optical monitoring signal. In this example, the system 100 comprises a signal returner 108 to return the optical monitoring signal, which is emitted along the optical channel 106 by the transmitter 102, back along the optical channel 106 to the receiver 104. In this case, at least a section of the optical channel 106 may be a duplex (or a dual-core or multi-core) optical fibre comprising a first optical fibre (or first core) to carry the emitted optical monitoring signal from the transmitter 102 to the signal returner 108, and a second optical fibre (or second core) to carry the returned optical monitoring signal from the signal returner 108 to the receiver 104. The signal returner 108 may comprise, for example, a loopback, such as a fibre loopback, or a reflector, such as a fibre Bragg reflector.

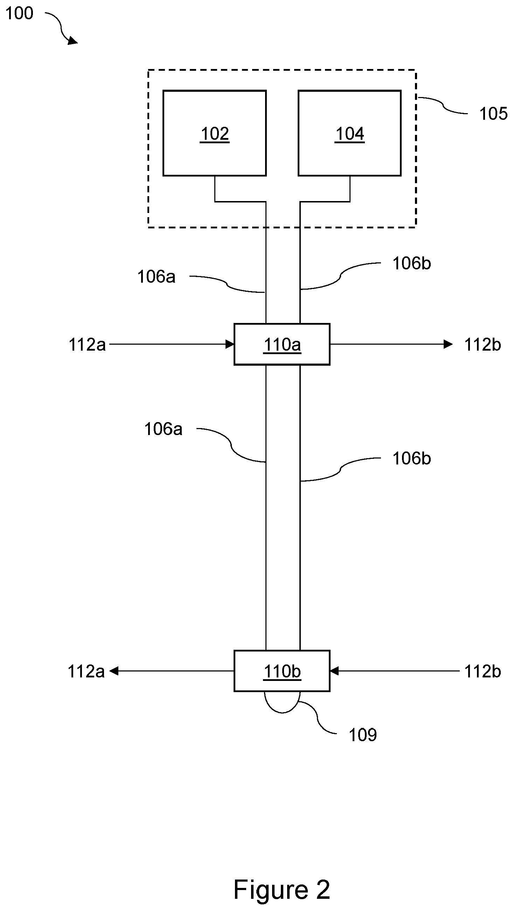

Figure 2 is a block diagram showing an exemplary hardware architecture for the system 100 of the disclosure, when the signal returner is a loopback 109. In this example, the optical channel is made up of a duplex optical fibre comprising a first optical fibre 106a for carrying the optical monitoring signal emitted by the transmitter 102 along the optical channel, and a second optical fibre 106b for carrying the returned optical monitoring signal back along the optical channel to the receiver 104. The loopback 109 is configured to couple the first and second optical fibres such that the optical monitoring signal is directed from the first optical fibre into the second optical fibre. Alternatively, the duplex optical fibre may be replaced by a dual-core or multi-core optical fibre, with a first core for carrying the optical monitoring signal emitted by the transmitter 102 along the optical channel and a second core for carrying the returned optical monitoring signal back along the optical channel to the receiver, in which case the following description would be equally applicable except that the two duplex fibres (106a, 106b) of the optical channel 106 would be replaced by two cores of a dual-core or multi-core fibre, and the same applies to the other examples described below.

Along the path of the optical channel 106 are two optical add-drop multiplexers (OADMs) 110. The OADMs are configured to combine or separate the optical monitoring signal with one or more further signal(s) 112 by multiplexing or demultiplexing the optical monitoring signal and the further signal(s) 112, for example using time division multiplexing or wavelength division multiplexing (such as dense wavelength division multiplexing). The further signal(s) may be data signals carrying meaningful data traffic along the optical channel, such as ethernet traffic. The OADMs may be existing features of a fibre-optic network, enabling the optical monitoring device 105 to be retrofitted into an existing fibre-optic network which would otherwise carry just the data signals 112 along the optical fibres.

In the example shown in Figure 2, a first OADM 110a is configured to multiplex one or more such further signal(s) 112a and the optical monitoring signal, such that the signals are transmitted together out along the first optical fibre 106a to a second OADM 110b which is configured to demultiplex the further signal(s) 112a and the optical monitoring signal. Similarly, the second OADM 110b is configured to multiplex another such further signal(s) 112b and the optical monitoring signal, such that the signals are transmitted together back along the second optical fibre 106b to the first OADM 110a which is configured to demultiplex the further signal(s) 112b and the optical monitoring signal. In practice, in a fibre-optic network, the first and second OADMs might be some kilometres apart (or even tens or hundreds of kilometres apart).

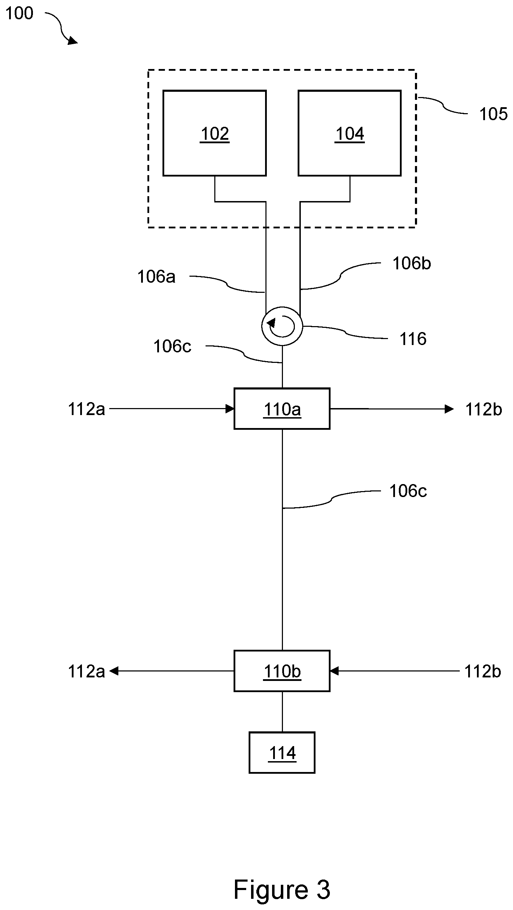

Figure 3 is a block diagram showing an exemplary hardware architecture for the system 100 of the disclosure, when the signal returner comprises a reflector 114. In this example, the optical channel comprises a similar duplex optical fibre section 106a, 106b between the optical monitoring device 105 and a circulator 116, however beyond the circulator the optical channel is formed as a simplex optical fibre. The circulator 116 is located at the interface between the duplex section of the optical channel and the simplex section 106c of the optical channel, such than the outbound optical monitoring signal travelling from the transmitter 102 along the first optical fibre 106a of the duplex section will be directed along the simplex section 106c of the optical channel, and a returning optical monitoring signal will be directed from the simplex section 106c to the second optical fibre 106b of the duplex section. Given that the optical channel downstream of the circulator 116 is simplex, rather than providing a fibre loopback to return the optical monitoring signal to the receiver 104, the system instead comprises a reflector 114, specifically a Bragg reflector, to reflect the optical monitoring signal back along the simplex optical fibre 106c. Upon reaching the circulator 116, the circulator will direct the returned optical monitoring signal into the second optical fibre 106b of the duplex section of the optical channel to the receiver 104. As with the example shown in Figure 2, first and second OADMs 110a, 110b are located along the optical channel to combine and separate the optical monitoring signal and further signals 112a, 112b, using multiplexing as described above. The arrangement shown in Figure 3 is suitable where the fibre optic link being tested (i.e., the section between the OADMs) is a simplex link, rather than a duplex link.

Although not shown in either Figure 2 or Figure 3, the system 100 may include one or more optical amplifiers between the first and second OADMs. The optical amplifiers act to amplify the optical monitoring signal to counter losses along the optical channel and thereby extend the range of the optical monitoring signal and therefore the length of the optical channel 106 that could be tested using the system of the present disclosure.

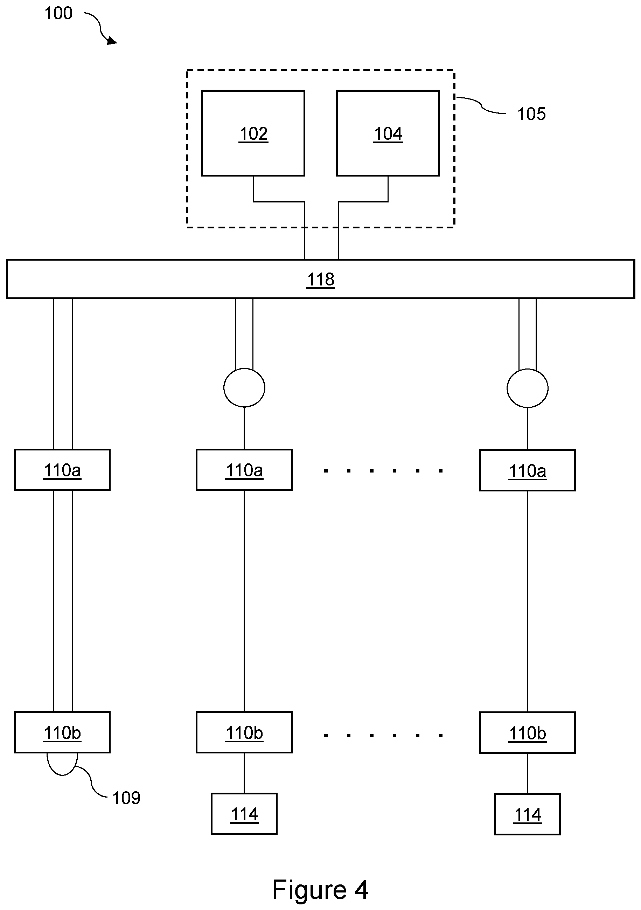

Figure 4 is a block diagram showing an exemplary hardware architecture for the system 100 of the disclosure, when a single optical monitoring device 105 is used to monitor multiple optical channels. In this example, the system comprises a switch 118 (e.g., a one-to-many switch) to direct the optical monitoring signal, emitted by the transmitter 102, to one of multiple different optical channels. For example, the switch may be a duplex-type switch to match the duplex nature of the optical monitoring device 105 in the specific examples described above. Figure 4 shows for example a first optical channel on the left-hand side comprising a loopback 109, as in the example described with respect to Figure 2, and second and third optical channels comprising reflectors 114 as in the example described with respect to Figure 3. Other examples may include larger numbers of optical channels to be monitored by the device 105.

The switch 118 may be configured to direct the optical monitoring signal, emitted by the transmitter 102, along the first optical channel for a period of time, then along the second optical channel for a period of time, and finally along the third optical channel for a period of time, before returning to the first optical channel. In this way, a single device 105 can be used to provide a polling architecture to monitor multiple different optical channels intermittently. In particular, a single optical monitoring device 105 may be located at one node of a fibre-optic network and used to monitor each of the optical fibres originating or terminating at that node. Using this polling architecture, disturbances that occur during a period when a particular channel is not being actively monitored can still be detected by monitoring changes in the optical monitoring signal (or in the metrics derived from the optical monitoring signal) between active monitoring periods of each channel. For example, a disturbance may be detected where the transmission metric for one of the channels changes significantly between the periods in which that channel is being actively monitored. An eavesdropper could avoid detection only by beginning and ending their eavesdropping attack on a channel while that channel is not being monitored. This risk can be reduced by randomly polling the various channels, such that an eavesdropper cannot predict the periods when a particular channel will be actively monitored and therefore cannot time their attacks to avoid detection.

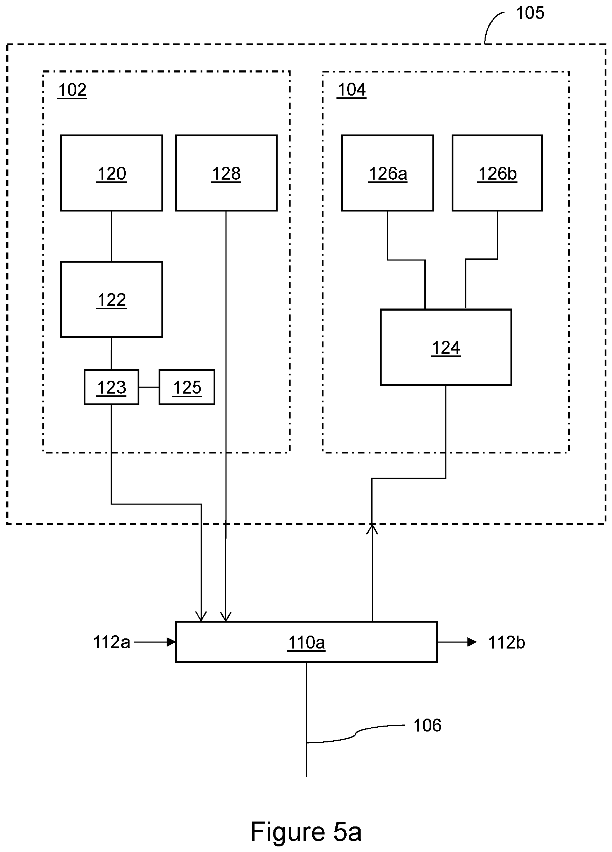

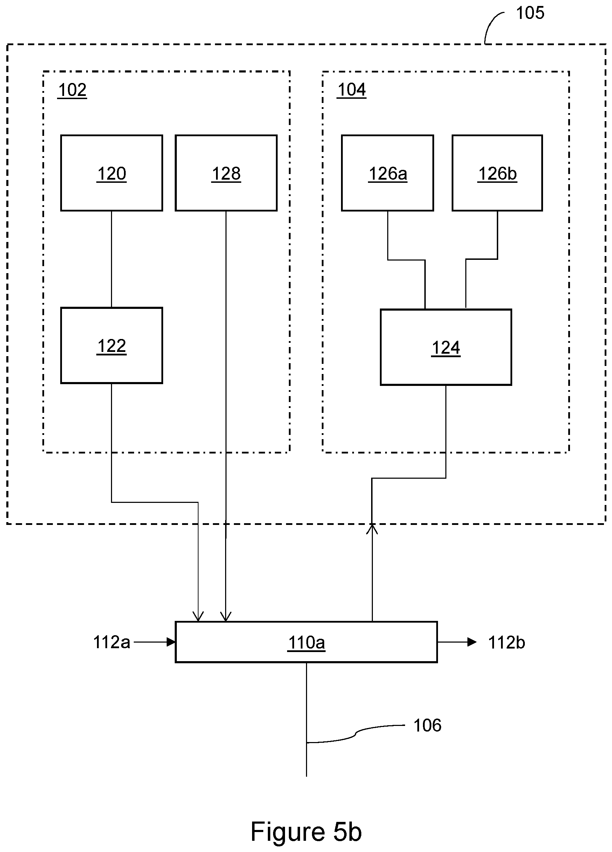

Figures 5a and 5b are block diagrams showing exemplary internal hardware architectures for the transmitter 102 and receiver 104 of the device 105.

The transmitter 102 comprises a light source 120 used to generate the optical monitoring signal. The light source may be configured to generate a gaussian state of light. In these examples, the light source is a laser. In particular, the light source is a continuous wave laser. The transmitter also comprises a modulator 122 (e.g., an amplitude modulator), configured to apply a modulation (e.g., an amplitude modulation) to the light emitted from the light source 120. The light emitted from the light source 120, as modulated by the modulator 122, forms the optical monitoring signal that is emitted from the transmitter 102 (e.g., through a transmit port of the device 105) into the optical channel 106. While the examples in Figures 5a and 5b show the light source 120 and modulator 122 as separate components, in other examples the modulation may be applied directly by the light source 120 rather than having a separate modulator 122, for example by modulating the laser drive current when the light source is a laser.

The receiver 104 comprises a polarising beam splitter 124 and at least one photodetector 126. In these examples, the receiver 104 comprises two photodetectors 126a, 126b. The receiver 104 is configured to receive the optical monitoring signal (e.g., through a receive port of the device 105) from the optical channel 106. The polarising beam splitter 124 is configured to decompose the optical monitoring signal into two orthogonally polarised components. One of these orthogonally polarised components is then directed to a first photodetector 126a, and the other component is directed to the second photodetector 126b, as indicated by the lines from the polarising beam splitter 124 to the photodetectors 126a, 126b. The photodetectors are configured to determine, for each of the two orthogonally polarised components, at least one parameter relating to an amplitude or intensity of the components. This parameter can then be used to detect a disturbance in the optical monitoring signal as described below.

In some examples the modulation applied by the modular 122 may be a random modulation, such as a random amplitude modulation where the amplitude of the signal is modulated between randomly chosen values. In other examples, the modulation may be a fixed modulation, such as a fixed amplitude modulation where the amplitude of the signal is modulated between fixed (i.e., non-varying) high and low values. In either case, the amplitude of the modulation may be small relative to the light emitted from the light emitter 120, such that the optical monitoring signal comprises a constant intensity part (corresponding to the intensity of the light emitted by the light emitter 120) and a fluctuating part (corresponding to the modulation applied by the modulator 122).

When the optical monitoring signal is generated by the transmitter 102, the modulator 122 is configured to apply a sequence (e.g., a fixed or a random sequence) of modulations to the light emitted by the light emitter. For example, the sequence of modulations applied to the light might be a sinusoidal modulation such that the intensity of the optical monitoring signal oscillates between intensity states (e.g., for a non-random modulation, between a high state at the peak of the modulation and a low state at the trough of the modulation). The modulator 122 may be configured to carry out a finite sequence of modulations over a portion of the optical monitoring signal. Therefore, each such portion of the optical monitoring signal can be represented as a first vector comprising a series of values corresponding to the sequence of modulations, where each value in the vector represents the intensity of the optical monitoring signal (or, specifically, of the fluctuating part of the signal) at each point in the modulation sequence.

When the optical monitoring signal is received at the receiver 104, the photodetectors 126a, 126b measure the intensity of the two orthogonally polarised components of the signal. Therefore, the sum of the intensities measured by the photodetectors represents the total intensity of the optical monitoring signal received at the receiver 104. The receiver may be configured to construct a second vector comprising a series of values representing the intensity of the optical monitoring signal (based on the time of the photodetector measurements) at each point of in the modulation sequence. Based on the correlations between the sequence of intensities of the optical monitoring signal transmitted by the transmitter 102 and the sequence of intensities measured at receiver 104, a disturbance in the optical monitoring signal can be determined, which may be indicative of a malicious or non-malicious disturbance of the optical channel.

The first vector, representing the series of transmitted intensity values, may be constructed from a direct measurement of the transmitted optical monitoring signal, from a lookup table, or from a combination of both techniques.

The architecture shown in Figure 5a can be used to construct the first vector from a measurement of the transmitted optical monitoring signal (before the signal is transmitted into the optical channel 106). In this case, the transmitter 102 comprises a beamsplitter 123 to separate a portion of the optical monitoring signal (downstream of the modulator 122) and to direct that portion to a further photodetector 125 to obtain intensity measurements. The remaining portion of the signal is allowed to pass through the beamsplitter 123 and is transmitted from the device 105 into the channel 106. In one example, the separated portion may be 10% of the optical monitoring signal, with the remaining 90% is transmitted into the channel 106 (i.e., the beamsplitter 123 is a 10:90 beamsplitter), and in another example the separated and remaining portions are each 50% of the signal (i.e., the beamsplitter 123 is a 50:50 beamsplitter). When the separated and remaining portions are unequal, or in any case, the transmitted intensity values (represented by the first vector) and the received intensity values (represented by second vector) may be scaled as to as be in the same frame of reference, and the scaling may correspond to the splitting ratio of the beamsplitter.

The architecture shown in Figure 5b does not include the beamsplitter and further photodetector that are shown in Figure 5a. In the example shown in Figure 5b, the first vector can be constructed from calibrated intensity values stored in a lookup table. For example, if the transmitter emitted an optical monitoring signal with a modulation pattern comprising five high states and five low states, the first vector can be constructed as five calibrated high state intensity values and five calibrated low state intensity values retrieved from the lookup table. The lookup table may be obtained from a step of calibrating the optical monitoring device before it is used for active monitoring to obtain a calibration function which provides the actual intensity of the optical monitoring signal output by the transmitter as a function of the settings of the transmitter.

In other examples, a combination of both of these techniques is used. In this combined case, intensity measurements of the optical monitoring signal are obtained (e.g., using the beamsplitter 123 and photodetector 125 described with reference to Figure 5a) but rather than constructing the first vector directly from the measurements, the measurements are instead used to adjust (e.g., scale) the values retrieved from the lookup table. Using measurements of the optical monitoring signal to construct the first vector (either directly from the measurements, or indirectly by adjusting the lookup values based on the measurements) enables the system to account for drifts in the intensity of the optical monitoring signal over time which can occur, for example, due to temperature changes of the light source 120, modulator 122, and photodetectors 126a, 126b.

The photodetectors 126a, 126b are configured to determine, for each of the two orthogonally polarised components, at least one parameter relating to an amplitude or intensity of the components. This parameter may be: (a) the absolute amplitude or intensity of each of the orthogonally polarised components, or the combined amplitude or intensity of the two orthogonally polarised components (b) the relative amplitude or intensity of one of the orthogonally polarised components compared to the other or (c) the amplitude or intensity of either the constant or fluctuating part of the optical monitoring signal. With regard to (c), the at least one parameter may comprise a parameter relating to the amplitude or intensity of the modulation (i.e., the amplitude or intensity of just the fluctuating part) of one or both of the two orthogonally polarised components.

The transmitter 102 may be configured to emit the optical monitoring signal along the optical channel in an unpolarised or randomly polarised state. Alternatively, the transmitter may be configured to emit the optical monitoring signal along the optical channel in an elliptically polarised or circularly polarised state.

In addition to the light emitter 120 for generating the optical monitoring signal, the transmitter 102 in this example also comprises an optical time-domain reflectometer (OTDR) 128 configured to emit (e.g., from a separate transmit port of the device 105) one or more pulses of light into the optical channel and to detect (from the same end of the channel) light backscattered or reflected from the optical channel. The backscattered or reflected light can be used to identify features of the optical channel, such as a splices, connections, and defects in an optical fibre. Using time of flight measurements, the OTDR can be used to determine the location of these features in the optical channel. The OTDR may be configured to emit the one or more pulses of light at regular time intervals to provide regular monitoring of the optical channel. Alternatively, or additionally, the OTDR may be configured to emit the one or more pulses of light based on the measurements of the photodetectors 126a, 126b, such that OTDR measurements are triggered when a potential disturbance of the optical monitoring signal is determined.

As described above, an OADM 110a multiplexes the signals output from the optical monitoring device with one or more data carrying signal(s) 112a. In this case, the OADM 110a multiplexes together the optical monitoring signal from the light source 120, the OTDR signal from the OTDR 128 (when OTDR pulses are emitted), and the data carrying signal(s) 112a, such that these signals are transmitted together along the optical channel 106 as described above. Similarly, the OADM 110a is configured to demultiplex the optical monitoring signal and the data carrying signal(s) 112b received from the optical channel 106.The system 100 described in the examples above can be used as part of a fibre-optic network, such as a geographically distributed fibre-optic network. The network may comprise a plurality of nodes connected by a plurality of optical fibres. The fibre-optic network is configured to transmit network data over the optical fibres between the nodes. The network may comprise a plurality of systems according to any of the examples described above. For example, each node in the network may comprise a system as described above. Alternatively, the system may be distributed over the network, for example the transmitter may be located at one node in the network and the receiver may be located at another node of the network. The system may be configured to transmit the optical monitoring signal along with the network data along one or more optical fibres in the network. The optical monitoring signal and network data may be transmitted in different wavelength channels (i.e., wavelength division multiplexed with one another).

As will be appreciated from the examples described above, the optical channel may not be a single optical fibre, but rather the optical channel may be formed of multiple distinct optical fibres (such as multiple fibres of a duplex optical fibre), or distinct sections of optical fibres (such as between the transmitter, OADMs, signal returner, and receiver).

### Software architecture

Figure 6 is a block diagram showing an exemplary software architecture 200 for the disclosure. The software architecture 200 is a software defined networking (SDN) architecture. The architecture includes a centralised SDN controller 202 configured to exchange data with a data broker 204. The data broker 204 in this example is an Apache Kafka data broker. The data broker 204 is configured to exchange data and configuration information with a physical layer, as shown in the dashed box in Figure 6. The physical layer includes a series of SDN agents 206a-n which are each associated with separate optical monitoring devices 105a-n (as described above with respect to Figures 1 to 5). Four SDN agents are shown in Figure 6, but in practice any number of SDN agents can be used. The SDN agents may be software endpoints associated with each optical monitoring device 105, for exampling running on internal processors of each device 105. The data broker 204 aggregates raw data received from the SDN agents 206a-d, such as the measurements of the photodetectors 126a, 126b of each optical monitoring device 105, and/or the determined at least one parameter relating to an amplitude or intensity of the two orthogonally polarised components of the optical monitoring signal. This aggregated data is transferred to the SDN controller 202 which can perform filtering, anomaly or change detection and analysis. The SDN controller 202 may include a user interface (not shown) for example for allowing user authentication.

The SDN controller 202 may export data to a dashboard 208 to be displayed to a user. The dashboard may be configured to enable a user to visualise the raw data (such as a graphical representations of the data) or analytics derived from the data (such as metrics calculated from the data) and alerts relating to detected changes in the data. A database 210 is also provided, in communication with the SDN controller 202, for storage and retrieval of data. In addition to exporting data to the dashboard 208, the architecture 200 may also provide one or more application programming interfaces (APIs) for exporting data to external user software systems such as an API 212 from the SDN controller 202 and/or an API 214 from the data broker 204. In either case, the API may provide an interface for exporting processed data, such as data that has been pre-filtered by the controller or analytics that have been derived from the data by the controller, or for exporting the raw data collected from the physical layer. Alerts or alarms triggered by the detection of a disturbance may also be notified to a user via the API.

### Disturbance detection

The photodetectors of the system described above are configured to determine, for each of the two orthogonally polarised components of the optical monitoring signal, at least one parameter relating to an amplitude or intensity of the components thereby to detect a disturbance in the optical monitoring signal. The disturbance of the signal may be indicative, for example, of a malicious eavesdropping attack on the optical channel or a non-malicious disturbance of the optical channel.

To identify disturbances of the optical monitoring signal, the at least one parameter may be used to calculate one or more metrics in relation to the optical monitoring signal which may indicate a disturbance.

The one or more metrics may include a transmission metric. The transmission metric relates to the proportion of the transmitted optical monitoring signal that is received by the receiver. That is, the transmission metric is related to the proportion of the light originally transmitted from the transmitter that reaches the receiver (either the proportion of the entire signal, or the proportion of the constant part or fluctuating part described above). Accordingly, the transmission metric can be used to identify an eavesdropping attack in which part of the light transmitted from transmitter to the receiver is removed by an eavesdropper along the optical channel, even if the eavesdropper injects light into the channel to replace that they have removed, because - unless the injected light matches exactly the modulation sequence of the optical monitoring signal, which is practically infeasible at least when the modulation sequence is random - the injected light will not be correlated with the light originally transmitted from the transmitter.

The one or more metrics may include an excess noise metric. The excess noise metric relates to the noise of the measurement above shot noise, for example the excess noise metric may relate to the noise of the measurement of quadratures above shot noise, which is the unavoidable noise associated with measuring the optical monitoring signal. Excess noise above the shot noise may originate from the components of the system (e.g., thermal noise associated with the channel or the photodetectors) but also from malicious interference with the optical channel, such as uncorrelated light (i.e., uncorrelated with the light transmitted by the transmitter to the receiver) being injected into the optical channel to replace light removed from the optical channel by an eavesdropper.

The one or more metrics may include a polarisation state metric. The polarisation state metric relates to the relative amplitudes or intensities of the two orthogonally polarised components of the optical monitoring signal. The polarisation state metric can therefore be used to identify physical deformations of the optical channel, such as the bending of an optical fibre, which will affect the state of polarisation of the optical monitoring signal. The polarisation state metric may be a simple difference between the measured amplitudes or intensities of the two orthogonally polarised components of the optical monitoring signal, or a ratio of the difference in the intensities of the components to the total intensity of the optical monitoring signal. In the latter case, the polarisation state metric may therefore take a value between -1 and 1, where these values represent the cases where the intensity of one of the orthogonally polarised components is zero and the other is equal to the total intensity of the optical monitoring signal, or vice versa. A change in the relative amplitude or intensity of the two orthogonally polarised components can indicate that the optical channel has been physically disturbed, such as by movement of the ground in which the optical channel is buried, or by an eavesdropper handling the optical fibre to interfere with the channel. Accordingly, disturbances can be detected by monitoring the polarisation state metric for changes over time, meaning that it is not necessary to determine the absolute state of polarisation of the optical monitoring signal. Therefore, a polarisation controller (to control the state of polarisation of the optical monitoring signal relative to the axis of the polarising beam splitter) is not required.

In any case, the metrics may be calculated based on elements of a covariance matrix. The covariance matrix is a square matrix relating to the covariance between pairs of elements of two vectors. In this case, the covariance matrix is calculated based on a first vector representing a series of intensities of the optical monitoring signal as transmitted along the optical channel and a second vector representing the same series of intensities of the optical monitoring signal as received at the receiver. The intensities may not be the absolute value of the intensity of the optical monitoring signal, but rather the magnitude of the fluctuating part of the signal. The fluctuating part of the signal may be measured, for example, by using AC-coupled photodetectors as the photodetectors 126a, 126b, or by measuring the absolute value of the signal and subtracting the constant part. The first vector may be representative of the modulation sequence imprinted on a portion of the optical monitoring signal by the modulator 122 as described above. The second vector may then be representative of the same modulation sequence from the same portion of the optical monitoring signal as received at the receiver 104 and measured by the photodetectors 126a, 126b. The actual intensities measured at the receiver may be different from what was sent by the transmitter, even when there is no disturbance of the optical channel, due to losses along the optical channel and noise. The vector of intensities transmitted by the transmitter is denoted as *I_{T}* and the vector of intensities measured by the receiver is denoted as *I_{R}.*

For two such intensity vectors, the elements of the two-by-two covariance matrix C are defined as: ${C}_{i , j} = E \left[{I}_{i}{I}_{j}\right] - E \left[{I}_{i}\right] E \left[{I}_{j}\right]$ (1) where *I_{i,j}* is the intensity vector transmitted by the transmitter (when *i,j = T*) or received by the receiver (when *i, j* = *R*), and 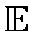 denotes the expectation value or average.

In the case where the transmitted intensity vector *I_{T}* is constructed from lookup table values, the intensity states transmitted by the transmitter can be represented as a coherent state |*α_{T}*〉, where ${α}_{T} = \frac{1}{2} \left({q}_{T}+{ip}_{T}\right)$, and where the transmitted quadratures (*q_{T}* and *p_{T}*) are picked at random in the case of a random modulation sequence. This state is transmitted along the optical channel to the receiver, and the transmitter can record which coherent states that have been sent (by reference to calibrated lookup table values, which may be dynamically updated based on measurements of the transmitted signal, as described above), so the transmitter can calculate the expectation value of the transmitted intensity as: ${I}_{T} = {\left|{α}_{T}\right|}^{2} = \frac{1}{4} \left({q}_{T}^{2}+{p}_{T}^{2}\right)$ (2)

For this reason, the transmitter will take this classical quantity as the transmitted intensity variable. On the other hand, the receiver directly measures the received optical monitoring signal to construct the received intensity vector, so this must be represented by a quantum mechanical observable. In shot noise units, the receiver's intensity operator $\hat{{I}_{R}}$ is given by: $\hat{{I}_{R}} = {a}_{R}^{†} {a}_{R} = \frac{1}{4} \left({\hat{q}}_{R}^{2}+{\hat{p}}_{R}^{2}\right) - \frac{1}{2}$ (3) where *q̂_{R}* and *p̂_{R}* are quadrature operators for the receiver and $- \frac{1}{2}$ is the quantum correction. From the above it can be seen that calculating the covariance matrix requires calculation of moments of quadratures between the transmitter and receiver which is a mixture of classical and quantum observables.

The general form of the covariance matrix for the covariance of the intensity vectors *I_{T}* and *I_{R}* is given by: $C = \left(\begin{matrix}{C}_{TT} & {C}_{TR} \\ {C}_{RT} & {C}_{RR}\end{matrix}\right)$ (4)

Taking the elements of the transmitted intensity vector to be *I_{T} =* (*a*₁, *a*₂, ... *a_{N}*) and the elements of the received intensity vector to be *I_{R}* = (*b*₁, *b*₂, *... b_{N}*), each element of the covariance matrix can be calculated numerically as follows: ${C}_{TT} = \frac{1}{N - 1} {\sum }_{i = 1}^{N} {\left({a}_{i}-E\left[a\right]\right)}^{2}$ (5) ${C}_{RR} = \frac{1}{N - 1} {\sum }_{i = 1}^{N} \left({b}_{i}-E\left[b\right]\right)$ (6) ${C}_{TR} = {C}_{RT} = \frac{1}{N - 1} {\sum }_{i = 1}^{N} \left({a}_{i}-E\left[a\right]\right) \left({b}_{i}-E\left[b\right]\right)$ (7) where N is the total number of elements in each intensity vector, and *a̅* and *b̅* are the expectation values for the elements of *I_{T}* and *I_{R}* given respectively as: $E \left[a\right] = \frac{1}{N} {\sum }_{i = 1}^{N} {a}_{i} E \left[b\right] = \frac{1}{N} {\sum }_{i = 1}^{N} {b}_{i}$ (8)

Given that equations (5) and (6) above for the elements *C_{TT}* and *C_{RR}* correspond to the formulae for the variance of the values in vectors *I_{T}* and *I_{R}* respectively, these elements can simply be written as *V_{T}* (the variance of *I_{T}*) and *V_{R}* (the variance of *I_{R}*) respectively. Therefore, the elements of the covariance matrix are: $C = \left(\begin{matrix}{V}_{T} & {C}_{TR} \\ {C}_{RT} & {V}_{R}\end{matrix}\right)$ (9)

Calculating the covariance matrix analytically (by calculation of moments of quadratures between the transmitter and receiver) gives the following formulae for the elements of the matrix: $C = \left(\begin{matrix}{V}_{T} & {TV}_{T} \\ {TV}_{T} & {T}^{2} {V}_{T} + {Tv}_{R} E \left[{I}_{T}\right] + \frac{1}{4} \left({v}_{R}^{2}-1\right)\end{matrix}\right)$ (10) where *V_{T}* is the variance of the elements of the transmitted intensity vector, *T* is the transmission metric, *v_{R}* = *ξ* + 1 represents the variance of the quadratures received by the receiver in the absence of modulation (and is given by the sum of the excess noise of the quadratures *ξ* and quantum shot noise), and $E \left[{I}_{T}\right]$ is the expectation value or average for the vector of transmitted intensities.

Setting equations (9) and (10) equal to one another gives the formula for the transmission metric *T* as: $T = \frac{{TV}_{T}}{{V}_{T}} = \frac{{C}_{TR}}{{V}_{T}} = \frac{{C}_{RT}}{{V}_{T}}$ (11)

The formula for the excess noise metric *ξ* is given by: $ξ = - \left(1+\frac{2 {C}_{TR} E \left[{I}_{T}\right]}{{V}_{T}}\right) + 2 \sqrt{\frac{{C}_{TR}^{2}}{{V}_{T}^{2}} \left(E{\left[{I}_{T}\right]}^{2}-{V}_{T}\right) + {V}_{R} + \frac{1}{4}}$ (12)

*V_{T}* and $E \left[{I}_{T}\right]$ are known values, because the sequence of intensity values that make up the vector *I_{T}* are known by the sender (e.g., the transmitter 102 of the optical monitoring device 105 can record the sequence of intensities emitted along the optical channel) meaning that the variance and expectation value for the vector can be calculated numerically (e.g., using equation (5) for *V_{T}*). Similarly, *C_{TR}* and *V_{R}* can be calculated numerically based on the known values for *I_{T}* and the measured values for *I_{R}* (as measured by the photodetectors 126a, 126b of the receiver 104) and equations (6) and (7) above. Accordingly, the transmission metric and noise metric can be calculated solely based on the vectors of intensities of the optical monitoring signal transmitted by the transmitter 102 along the optical channel and received by the receiver 104 from the optical channel.

Determining the transmission and excess noise metrics as described above does not require measuring the optical quadratures of the transmitted signal via homodyne or heterodyne measurements and constructing the covariance matrix of these observables. Each homodyne measurement would typically require four photodetectors in two balanced pairs, a balanced beamsplitter and a synchronised local oscillator, and such measurements are susceptible to local oscillator phase drift that must be corrected via post processing of the measured data. By measuring the intensity (rather than quadratures), as in the present disclosure, there is no need to perform heterodyne or homodyne measurements which reduces the hardware required and no longer requires any phase correction. The covariance matrix of intensity variables allows the same metrics to be extracted as in homodyne-based systems. Therefore, this reduces the cost of the system and the computational overhead of data processing to obtain the same metrics.

To accurately determine the transmitted intensity values, and therefore to accurately determine *V_{T}* and $E \left[{I}_{T}\right]$, the intensity of the transmitter may be calibrated. The calibration may involve measuring the transmission metric *T* via other means, for example by measuring the intensity of the optical monitoring signal (e.g., using a separate photodetector) before and after the signal is transmitted along the optical channel. Using this measurement, it is possible to record calibrated intensities for the optical monitoring signal as transmitted by the transmitter. For example, this measurement may be used to record calibrated intensity values for the peaks ('high states') and troughs ('low states') in the modulation of the signal. This information can be stored in a lookup table, such that when the transmitter emits an optical monitoring signal with a sequence of modulated intensities, the transmitter can construct the vector *I_{T}* from the calibrated intensity values stored in the lookup table. In this way, when calculating the covariance matrix, it is not necessary to make any direct measurement of the transmitted signal to obtain values for *I_{T}.* For example, if the transmitter emitted a signal with a modulation pattern comprising five high states and five low states, the vector *I_{T}* can be constructed as five calibrated high state intensity values and five calibrated low state intensity values from the lookup table. The lookup table values may be dynamically adjusted based on measurements of the optical monitoring signal as described above with reference to Figure 5a to reduce the effects of temperature drifts of the light source, photodetectors, or modulator.

The mathematics above relates to the case where the vector *I_{T}* is constructed from such (static or dynamic) lookup table values. Where the vector *I_{T}* is constructed directly from measurements of the optical monitoring signal before the signal is transmitted into the optical channel, equation (10) above for the covariance matrix would include minor modifications.

Any of the metrics described above (and the covariance matrix, where the covariance matrix is used to calculate the metrics) may be calculated repeatedly based on successive portions of the optical monitoring signal. For example, a first set of metrics (the transmission metric, excess noise metric, and polarisation state metric), and the corresponding covariance matrix from which the metrics are calculated, may be calculated for a first portion of the optical monitoring signal which carries a first sequence of modulations, and then a second set of metrics and the corresponding covariance matrix may be calculated for a second portion of the optical monitoring signal which carries a second sequence of modulations, and so on. The successive portions of the optical monitoring signal may be temporally contiguous portions of the optical monitoring signal, or temporally overlapping portions of the optical monitoring signal, or temporally separated portions of the optical monitoring signal (i.e., intermittent) with breaks in between.

In any case, the result is a time-series of a plurality of the metrics calculated from the optical monitoring signal, for example a time-series of values for the transmission metric calculated based on successive portions of the optical monitoring signal. This time-series of values for the metrics can be analysed to detect changes which might indicate a disturbance, and an alert can be issued upon detection of a change in the metric. For example, an alert may be displayed on the dashboard 208 to make a user aware of a disturbance of the optical channel.

Figure 7 shows three graphs which plot time-series data for the transmission metric *T* (in graph (a)), the excess noise metric *ξ* (in graph (b)) and the total received intensity (in graph (c)) of an optical monitoring signal during an eavesdropping attack. In this example, before the attack the optical monitoring signal is transmitted through the optical channel with a transmission metric of around *T* = 0.14 and an excess noise metric of around *ξ* = 0.93. During the attack, which begins at around *Time* = 50, an eavesdropper (*E*) inserts a beamsplitter into the optical channel removing a portion of the light passing through the optical channel and injects replacement light into the channel. As a result, the total intensity of the light received by the receiver remains constant during the attack, as shown in graph (c), because the eavesdropper injects an amount of light equal to the amount of light they remove from the channel. However, because the light injected by the eavesdropper will not be correlated with the original optical monitoring signal (at least where the modulation pattern is random, such that the eavesdropper cannot mimic the modulation pattern in the light they inject) the attack can be detected in the values of the metrics *T* and *ξ* which change sharply when the attack begins. In particular, *T* decreases because correlated light is removed by the eavesdropper, and *ξ* increases because uncorrelated light is injected by the eavesdropper. The average received intensity *E*[*I_{R}*] shown in graph (c) follows the formula: $E \left[{I}_{R}\right] = TE \left[{I}_{T}\right] + \frac{ξ}{2}$ where *I_{T}* is the intensity of the transmitter and *I_{R}* is the intensity measured at the receiver.

To determine when a change in one of the metrics is sufficiently significant to be indicative of a disturbance in the optical monitoring signal, and therefore warrant issuing an alert, various changepoint detection algorithms may be used, such as thresholding algorithms or Bayesian changepoint algorithms as described below.

In one example, the change may be detected when any one of the following exceeds or drops below a threshold value or changes by a threshold amount from a baseline value: (a) the value of one of the calculated metrics (b) the difference between one of the calculated metrics and one or more reference values for the metric and/or (c) a parameter relating to a rate of change of the metric over time.

In another example, the change may be detected when a weighted moving average, or a parameter relating to a rate of change of the weighted moving average, exceeds or falls below a threshold value. The weighted average may be an average of the metric itself or of a difference between the metric and one or more reference values for the metric. In either case, the average is based on a plurality of calculations of the metric within a time window. In some examples, the calculations of the metric on which the moving average is based are weighted in favour of more recent calculations in the time window. For example, the weighted moving average may be an exponentially weighted moving average, weighted in favour of more recent calculations in the time window.

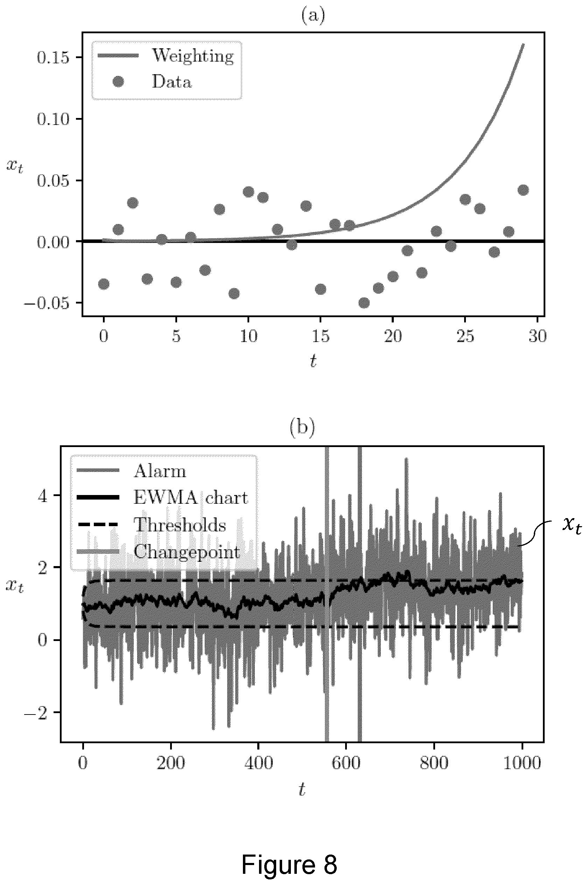

Figure 8 shows two graphs relating to the calculation of a weighted moving average and the use of the weighted moving average to detect a change in a metric associated with the optical monitoring signal.

Graph (a) in Figure 8 shows a series of data points, represented as dots on the graph, for a generalised metric (*xₜ*) relating to the optical monitoring signal over time (*t*). The metric may be, for example, the transmission metric, excess noise metric, or polarisation state metric described above. The graph shows one data point for each unit of time within a time window, which in this example is the window from *t* = 0 to *t* = 29 (with 30 datapoints in total). A weighted average of the 30 datapoints is calculated, using the weighting shown by the line in graph (a). In the example shown in graph (a), the weighting is in favour of more recent calculations in the time window, and specifically the weighted average is an exponentially weighted moving average in favour of more recent calculations in the time window. The weighted moving average value may be calculated for multiple moving windows of this size; for example, a first weighted average value may be calculated for the 30 data points in the window *t* = 0 to *t* = 29, a second weighted average value may be calculated for the 30 data points in the window *t* = 1 to *t* = 30, a third weighted average value may be calculated for the 30 data points in the window *t* = 2 to *t* = 31, and so on.

Graph (b) in Figure 8 shows a plot of data for the generalised metric (*xₜ*) over time (*t*). A calculated exponentially weighted moving average (EWMA) for the metric over time, calculated as described above, is overlaid on the graph. Upper and lower thresholds are indicated by the horizontal dashed lines. As described above, a change in the metric may be determined when the weighted moving average exceeds or falls below the threshold value (i.e., when the weighted moving average moves outside the dashed threshold lines in graph (b)). The first vertical line, at approximately *t* = 550, indicates the actual time of a changepoint for the metric; this may be, for example, the time at which an eavesdropping attack actually began, and it can be seen that the value of the metric (*xₜ*) changes noticeably at this point. The second vertical line, at approximately *t* = 630, indicates the time at which the EWMA exceeds the upper threshold for the first time, and therefore the time at which an alert or alarm may be issued.

In another example, the change may be detected when an equally weighted moving average (which is, in other words, a rolling average), or a parameter relating to a rate of change of the equally weighted moving average, is higher or lower than a threshold value. The equally weighted moving average may be an average of the metric itself or of a difference between the metric and one or more reference values for the metric. In either case, the equally weighted moving average may be based on a plurality of calculations of the metric within a time window that are equally weighted with respect to one another.

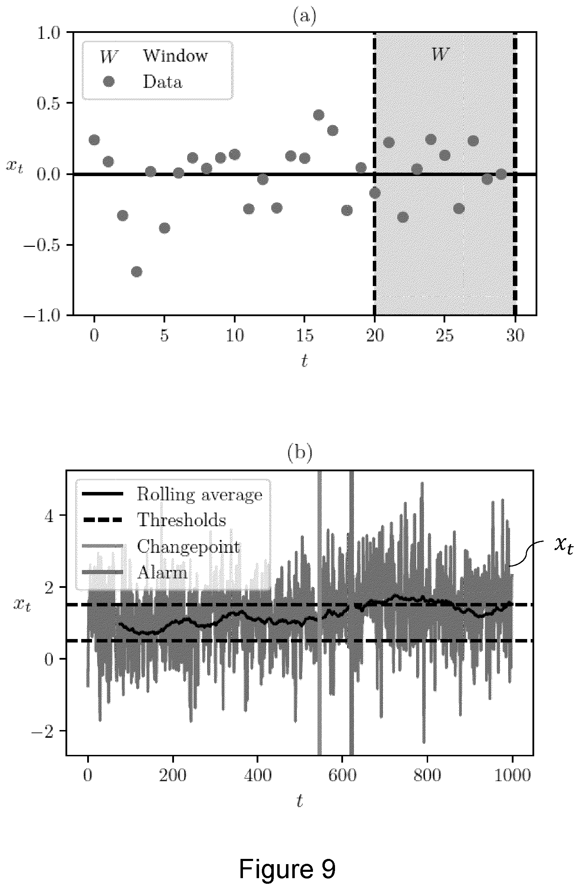

Figure 9 shows two graphs relating to the calculation of an equally weighted moving average (i.e., a rolling average) and the use of the equally weighted moving average to detect a change in a metric associated with the optical monitoring signal.

Graph (a) in Figure 9 shows a series of data points, represented as dots on the graph, for a generalised metric (*xₜ*) relating to the optical monitoring signal over time (*t*). The metric may be, for example, the transmission metric, excess noise metric, or polarisation state metric described above. Graph (a) shows two vertical dashed lines at *t* = 20 and *t* = 30 which define the window (*W*) over which the equally weighted moving average is calculated. This window comprises 10 data points one for each unit of time from *t* = 20 to *t* = 29, inclusive. With the equally weighted moving average, the data points over which the average is calculated are equally weighted with respect to one another, for example each data point may be given a weighting of 1. Therefore, the equally weighted average is simply the unweighted mean value of the data points in the window. The equally weighted moving average value may be calculated for multiple moving windows of this size, as described above for the weighted moving average.

Graph (b) in Figure 9 shows a plot of data for the metric (*xₜ*) over time (*t*). A calculated equally weighted moving average (i.e., rolling average) for the metric over time, calculated as described above, is overlaid on the graph. Again, upper and lower thresholds are indicated by the horizontal dashed lines. As described above, a change in the metric may be determined when the equally weighted moving average exceeds or falls below a threshold value (i.e., when the weighted moving average moves outside the dashed threshold lines in graph (b)). The first vertical line, at approximately *t* = 550, indicates the actual time of a changepoint for the metric; this may be, for example, the time at which an eavesdropping attack began, and it can be seen that the value of the metric (*xₜ*) changes noticeably at this point. The second vertical line, at approximately *t* = 630, indicates the time at which the equally weighted moving average (i.e., rolling average) exceeds the upper threshold for the first time, and therefore the time at which an alert or alarm may be issued.

In the examples shown in Figure 8 and Figure 9, the weighted moving average and the equally weighted moving average are calculated over differently sized windows of data points (the weighted moving average is based on 30 data points, whereas the equally weighted moving average is based on 10 data points). In other examples, the sizes of the windows may be the same for the two averages. The size of the windows may be selected to control the sensitivity of the alert, since an average calculated over a small window of data points may cross the threshold value more readily in response to short term variations in the data as compared to an average calculated over a large window.

In Figures 8b and 9b, the threshold values may be updated intermittently based on long-term trends in the data. For example, the average and standard deviation of the metric over a previous time window, or cumulative series of time windows, may be used to automatically set appropriate thresholds for the present time window. In this way, slower drifts of the data, which occur on timescales longer than the time window of interest, will not lead to alarms being triggered accidentally owing to thresholds becoming unsuited to the metrics as time progresses. The rate at which the thresholds are updated can be configured by the user depending on how sensitive they wish the system to be, and their tolerance for false alarms.

In some examples, the alert is issued if (and only if) it is determined that the equally weighted moving average (or a parameter relating to a rate of change of the equally weighted moving average) exceeds or falls below a threshold value within a time period of it being determined that the weighted moving average (or a parameter relating to a rate of change of the weighted moving average) exceeds or falls below a threshold value, or vice versa. In this way, a two-stage alert system can be provided where a first level alert (an 'amber' alert, for example) is issued when one of the two averages crosses a threshold value, and a second level alert (a 'red' alert, for example) is issued if the other one of the two averages crosses a threshold value within a time period thereafter. The time period may be equal to the time window over which the average is calculated; for example, if the weighted moving average exceeds a threshold value (thereby triggering the amber alert), the red alert may be issued only if the equally weighted moving average also exceeds the threshold within one window (*W*) of the amber alert being issued.

This two-stage alert system can provide a balance between the sensitivity of the alert and the reliability of the alert. As the weighted moving average is weighted in favour of more recent data in the window, it will be more sensitive to sudden changes in the data and tend to cross the threshold even when only a relatively small set of recent data points in the window lie outside the threshold. While this is useful for quickly identifying potential disturbances of the optical channel, it can also lead to false alarms. On the other hand, as the equally weighted moving average gives equal weighting to all data in the window, it will be less sensitive to sudden changes in the data and will cross the threshold values only when a substantial portion of the data points in the window lie outside the threshold - i.e., when a change in the data is sustained. Accordingly, a combination of these two averages in a two-stage alert system as described provides the advantages of both: the weighted moving average can provide quick responses to potential disturbances in the optical monitoring signal, while the equally weighted moving average can mitigate the risk of false alarms.

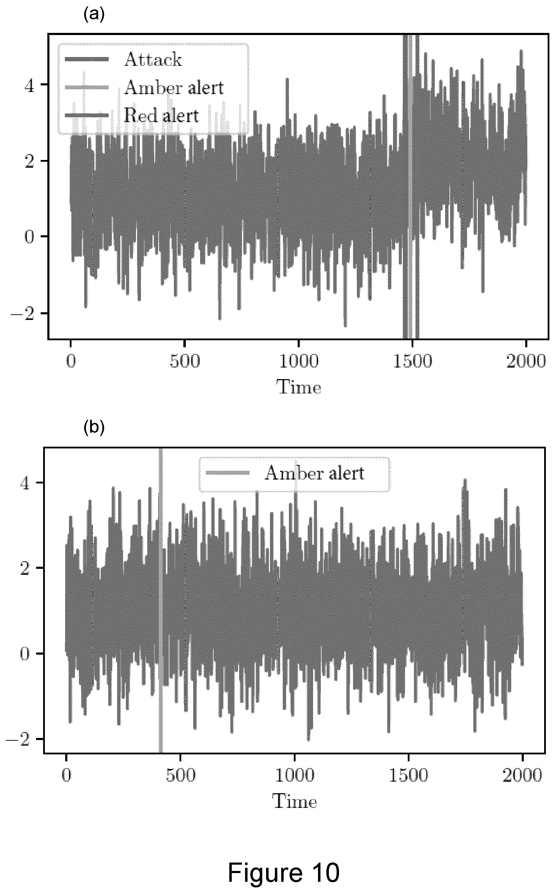

Figure 10 shows two graphs exemplifying the two-stage alert system. Graph (a) in Figure 10 shows a plot of data for a metric over time, and the three vertical lines indicate (from left to right): the time at which an attack on the optical channel began (at roughly Time = 1450); the time at which the amber alert is issued, which corresponds to the time at which the weighted moving average crosses a threshold value (at roughly Time = 1475); and the time at which the red alert is issued, which corresponds to the time at which the equally weighted moving average crosses a threshold value (at roughly Time = 1525). This shows the benefit of the amber alarm giving a rapid response while the red alarm gives a more certain confirmation of the disturbance a short time later. The other benefit of the two-stage alert system is shown in graph (b) in Figure 10, which shows another plot of data for a metric over time, and a single vertical line (at roughly Time = 400) indicating the time at which the amber alert is issued (which corresponds to the time at which the weighted moving average crosses a threshold value). In this case, an attack on the optical channel has not occurred, and the amber alert has been triggered as a result of random variations in the data causing the sensitive weighted moving average to cross the threshold. However, as the equally weighted moving average is less sensitive, it has not crossed the threshold, and the red alert has therefore not been triggered. The amber alert described above may not be immediately notified to a user; in some examples, the user may only be notified of an alert (e.g., by way of displaying an alert on the dashboard) only when both the amber alert and red alert are issued, such that the red alert effectively acts as a confirmation of the amber alert. If an amber alert is issued, and within a time period afterwards a red alert has not been issued, the amber alert may be cancelled or reset, as it is deemed to be a false alarm. In any case, even if the user is not notified of the amber alert, the system may still take some action in response to the amber alert, such as pausing communication over the channel until the amber alert is cancelled and communication can be resumed (or an attack is confirmed by a red alert, in which case communication is not resumed).

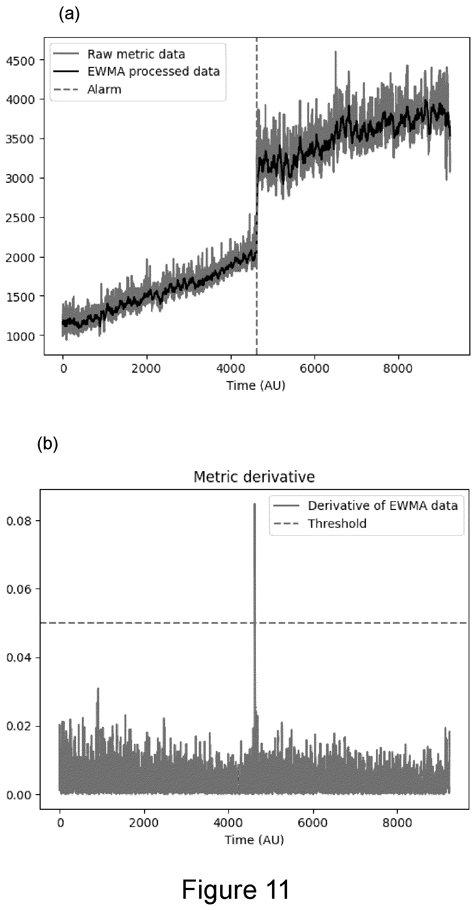

Figure 11 shows two graphs exemplifying an alert based on the rate of change of the metric exceeding a threshold value. Graph (a) shows raw time series data for a metric relating to the optical monitoring signal (such as the transmission metric, excess noise metric, or polarisation state metric described above). As can be seen, the value of the metric drifts upwards over time. Overlaid on graph (a) is the exponentially weighted moving average (EWMA) for the raw data. The vertical dashed line indicates the time at which a disturbance (e.g., an eavesdropping attack) begins. Graph (b) shows time series data for a parameter relating to the rate of change of the EWMA, and a horizontal dashed line representing a threshold value. If the parameter relating to the rate of change of the EWMA exceeds this threshold, an alert is issued. This method of alarm monitoring is suitable for raw metrics which display significant natural drift over time, due to benign environmental conditions affecting the optical channel, such as daily or seasonal temperature changes, and reduces the risk of such drifts triggering false alarms. Contrary to the techniques described with reference to Figures 8 and 9, in this case, only a single threshold needs to be defined, relative to zero, because the rate of change is always positive, and maintains a low value when no changes occur. If a change in the metric happens significantly faster than the characteristic speed of natural drift, then the rate of change of the metric will increase and may cross a threshold value, triggering an alert. In this case, the two-level alert system described above may not be applied, or may be applied in a way that uses two different threshold levels, or two different time windows for the rate of change calculation (corresponding to two different sensitivities, analogous to the two-level system described previously for the raw metrics).

The parameter *D_{n,w}* relating to the rate of change may be defined, for the transmission metric and the excess noise metric, as: ${D}_{n , w} = \frac{{x}_{n} - {x}_{n - w}}{{x}_{n - w}}$ where *xₙ* and *x_{n-w}* are the values of the metric, or the EWMA for the metric, at time n and time *n - w* respectively (*w*, corresponding to the width of the time window over which the change is determined, can be tuned by a user to provide a desired sensitivity). Accordingly, the parameter represents the amount of the change in the metric or EWMA for the metric as a fraction of the value of the metric or EWMA at the start of the window over which the change is determined. For the polarisation state metric, as this metric is typically defined to take a value between -1 and 1, the maximum possible change in the metric is 2, so the parameter relating to the rate of change may be defined as: ${D}_{n , w} = \frac{{x}_{n} - {x}_{n - w}}{2}$ to represent the amount of the change in the metric or EWMA for the metric as a fraction of the maximum possible change.

As described above, in some examples the change may be detected - and an alert issued - when there is a change in the difference between one of the calculated metrics and one or more reference values for the metric. This can be useful for filtering out environmental factors in the variation in a metric. For example, over the course of a day the metrics relating to the optical monitoring signal (the transmission metric, excess noise metric, and polarisation state metric) may fluctuate due to environmental factors affecting the optical channel, such as temperature changes or rush hour traffic vibrations. Therefore, rather than detecting changes in the metrics relative to a constant reference value, changes may be detected relative to dynamical reference data which takes account of expected fluctuations.

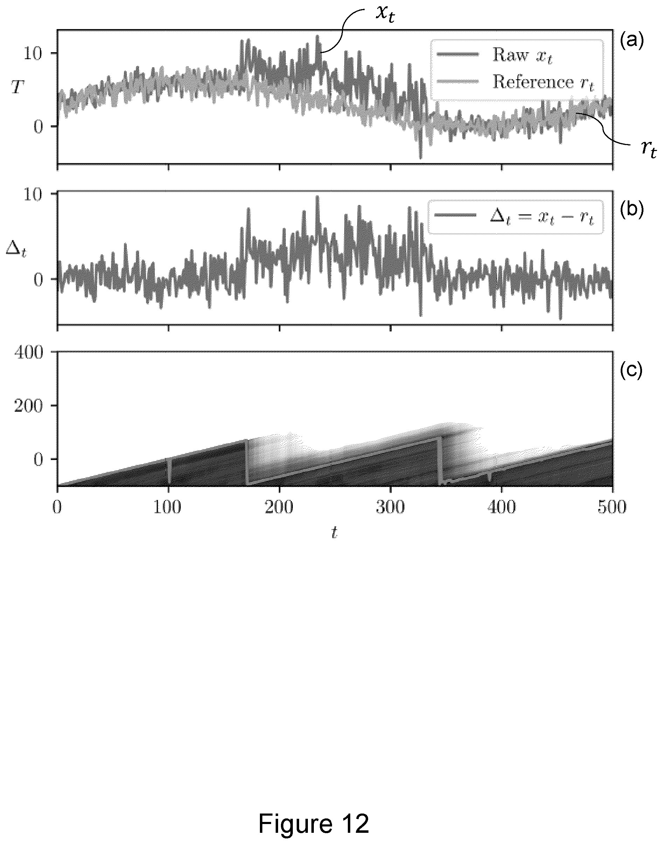

Figure 12 shows three graphs exemplifying a process for issuing an alert based on change in the difference between one of the calculated metrics and one or more reference values for the metric. Graph (a) shows two plots of time-series data for the transmission metric associated with an optical monitoring signal. The first plot, *xₜ*, represents live (raw) calculations of the transmission metric over a period of time (between *t* = 0 and *t* = 500), and the second plot, *rₜ*, shows reference values for the transmission metric of the same period of time. For example, the period of time may be the course of a day, and the reference values *rₜ* may represent the transmission values for the previous day, or the average daily transmission values over the previous week, for example. It can be seen from the reference data that the transmission is expected to vary over the period of time (e.g., due to temperature changes over the course of the day). To identify variations in the metric which diverge from what is expected, a further metric Δ*ₜ* can be defined, which is equal to the difference between the live calculations of the metric and the reference values for the metric as a function of time, where: Δ*ₜ* = *xₜ* - *rₜ.* When the metric is varying in line with what is expected, Δ*ₜ* will be approximately zero. However, when the metric diverges from the expected pattern of variation, Δ*ₜ* will increase or decrease, as shown in graph (b) in Figure 12 where Δ*ₜ* increases above zero between roughly *t* = 170 and *t* = 340. The reference dataset may be obtained by averaging over vectors quantifying measurements of the same channel from historic time windows of the same duration, or may be defined by the measurements from the same channel over the previous time window relative to the present one.

To determine when a change in Δ*ₜ* is sufficiently significant to be indicative of a disturbance in the optical channel, and therefore to warrant issuing an alert, the thresholding algorithms described above may be applied the time-series data for Δ*ₜ*. Alternatively, a Bayesian changepoint algorithm may be applied to determine changepoints in Δ*ₜ*. Graph (c) in Figure 12 is a run length plot derived from the application of a Bayesian changepoint algorithm to the data for Δ*ₜ* shown in graph (b). The plot in graph (c) effectively shows, for each point in time, the probability of the run length (that is, the length of time since the last changepoint). The darker the shading the higher the probability, and the white sections of the graph indicate zero probability. The maximum probability at each time is indicated by the saw-tooth line; a changepoint is indicated when the maximum probability is indicated for a run length of zero or a threshold value defined close to zero.

Rather than detecting changes in the simple difference between the calculations for the metric and reference values for the metric, changes may be detected instead in a parameter relating to the Euclidian distance between a first vector representing a plurality of calculated values for the metric and a second vector representing a plurality of reference values for the metric. The first vector may represent the series of calculated values for the metric over one period of time (e.g., over the course of a day) and the second vector may represent the series of calculated values for the metric over a previous period of time (e.g., over the course of the previous day).

In this case, the first vector representing a plurality of calculated values for the metric on day n may be refined as **x***ₙ* and the second vector representing a plurality of calculated values for the metric on the previous day *n* - 1 may be refined as **x**_{*n*-1}. The dimension of each vector **x***ₙ* and **x**_{*n*-1} (i.e., the total number of values in each vector) is *N.* The Euclidian distance function can therefore be defined as: ${d}_{n}^{2} = \frac{1}{2 N} {\left|{x}_{n}-{x}_{n - 1}\right|}^{2} = \frac{1}{2 N} {\sum }_{i = 1}^{N} {\left({x}_{n , i}-{x}_{n - 1 , i}\right)}^{2}$ where *x_{n,i}* and *x*_{*n*-1,*i*} are the *i*^{th} element of **x***ₙ* and **x**_{*n*-1} respectively.

The quantity ${d}_{n}^{2}$ will be zero if any only if **x***ₙ* = ***x***_{*n*-1}. Given that the metrics (transmission, excess noise, and polarisation state) are subject to fluctuation, ${d}_{n}^{2}$ will be non-zero even when there is no disturbance of the optical channel because small variations in the measurements of the metrics from day to day are expected. To detect significant changes in the value of the Euclidian distance ${d}_{n}^{2}$, the thresholding algorithms described may be used, or a changepoint algorithm such as a Bayesian changepoint algorithm may be used.

The same principle may be applied to OTDR data, which differs from the primary metrics in that OTDR data features a large number of datapoints all acquired at the same time (typically 10,000 or more points per measurement). In the case of repeated OTDR measurements of the same channel, with a time delay in between them, the Euclidian distance may be calculated between a first vector which is the complete OTDR dataset for a first OTDR measurement of the channel, and a second vector which is the complete OTDR dataset for a second OTDR measurement of the same channel. The Euclidian distance quantity therefore indicates the extent of similarity or difference between any two consecutive OTDR traces measured from the same channel.

The advantage of calculating the Euclidian distance quantity ${d}_{n}^{2}$ is that it effectively distils a large number of measurements of a metric over two periods of time (e.g., over the course of two days) into a single numerical value which quantifies how consistent the measurements of the metric are over the two periods of time. This allows tracking over time of a much smaller dataset than all of the raw metrics, streamlining monitoring and saving user time, resources, and attention. Action need only be taken if the Euclidian distance quantity shows a deviation from baseline, while baseline behaviour suggests no disturbances on the channel. The Euclidian distance measure therefore offers a good candidate for being presented on the user dashboard 208 over time, to give an intuitive and visual snapshot of channel security without showing excessive raw metrics. When the Euclidian distance quantity is seen to increase, steps can be taken to look into the underlying data to diagnose the disturbance, but otherwise, the underlying data (e.g., transmission metric, excess noise metric, polarisation state metric, or OTDR data) could not be displayed directly to the user to save resources and attention.

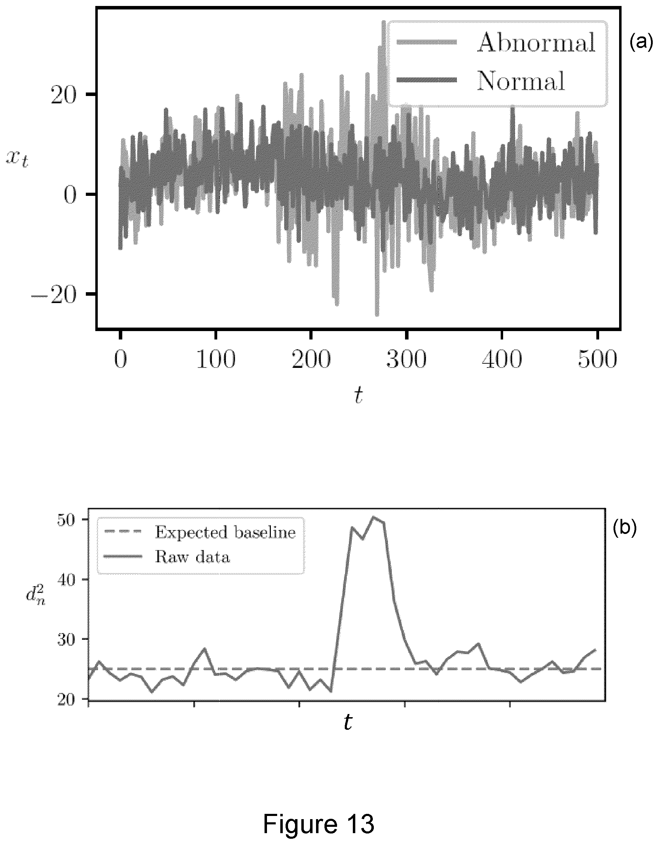

Figure 13 shows two graphs exemplifying the use of a Euclidian distance to detect a change in the metrics. Graph (a) in Figure 13 shows two plots of time-series data for a metric (*xₜ*) *-* for example the excess noise metric - over time (*t*). The narrower, less noisy plot shows normal data for the metric of a period of time, while the wider, noisier plot shows abnormal data for the metric over the same period of time. The normal and abnormal time-series data can each be represented as a vector and the Euclidian distance calculated to quantify, in a single number, the (in)consistency between the normal and abnormal data over the period. Graph (b) in Figure 13 plots the Euclidian distance quantity ${d}_{n}^{2}$ over time as a line graph, where each point on the line graph represents the value of ${d}_{n}^{2}$ for given metric for a single period of time (in this example, a single day). The expected baseline value for ${d}_{n}^{2}$, representative of the normal day to day fluctuations in the value of a metric, is shown as a dashed line at approximately ${d}_{n}^{2} = 25$. It can be seen from graph (b) in Figure 13 that the daily value for ${d}_{n}^{2}$ jumps approximately halfway through the period shown in the graph, which may indicate days where the metric was abnormal (e.g., as shown in graph (a)), potentially indicative of a distance of the optical channel on that day.

References above to a difference between the calculated metric and one or more reference values for the metric may refer to this Euclidian distance parameter, or to the metric Δ*ₜ* described above.

When a change in one of the metrics is detected (using any of the methods described above), action may be taken in response. First, as described above, a notification may be issued to the user, for example via a dashboard. This may be either when a first-stage ('amber') alert is raised, or only when a second-stage ('red') alert is raised. Second, communication over the optical channel may be modified in response to a detected disturbance. This modification may be automatic based on the detected change, or user-initiated following their notification. The modification may comprise: aborting communication over the optical channel (to stop an eavesdropping attack); rerouting communication around the optical channel (for example, along an alternative route through a communications network); or modifying the type of data communicated over the optical channel (for example, only sending non-sensitive data over the channel).

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. These claims are to be interpreted with due regard for equivalents.

Reference numerals appearing in the claims are by way of illustration only and shall have no limiting effect on the scope of the claims.

## Claims

1. A system comprising:
a transmitter; and
a receiver comprising a polarising beam splitter and at least one photodetector;
wherein:
the transmitter is configured to emit an optical monitoring signal along an optical channel to the receiver;
the polarising beam splitter is configured to decompose the optical monitoring signal into two orthogonally polarised components; and
the at least one photodetector is configured to determine, for each of the two orthogonally polarised components, at least one parameter relating to an amplitude or intensity of the components thereby to detect a disturbance in the optical monitoring signal.

2. A system according to Claim 1, wherein the transmitter comprises a modulator configured to apply a modulation to the optical monitoring signal.

3. A system according to Claim 2, wherein the modulation is a random modulation.

4. A system according to Claim 2 or 3, wherein the at least one parameter comprises a parameter relating to the amplitude or intensity of the modulation of the two orthogonally polarised components.

5. A system according to any preceding claim, wherein the transmitter and receiver are comprised in a single device, preferably wherein the optical channel comprises a signal returner to return the optical monitoring signal to the receiver, more preferably wherein the signal returner is a loopback, such as a fibre optic loopback, or a reflector, such as fibre Bragg reflector.

6. A system according to any of Claims 1 to 4, wherein the transmitter is located at one end of the optical channel, and the receiver is located at the other end of the optical channel.

7. A fibre-optic network comprising a plurality of nodes connected by a plurality of optical fibres, wherein the network, preferably each node of the network, comprises a system according to any preceding claim, preferably wherein the fibre-optic network is configured to transmit data over the optical fibres between the nodes, for example wherein the data and the optical monitoring signal are transmitted in different wavelength channels.

8. A method comprising:
transmitting an optical monitoring signal along an optical channel;
receiving the optical monitoring signal at a receiver;
decomposing, using a polarising bream splitter at the receiver, the optical monitoring signal into two orthogonally polarised components; and
determining, using at least one photodetector, at least one parameter for each of the two orthogonally polarised components, the parameter relating to an amplitude or intensity of the components, thereby to detect a disturbance in the optical monitoring signal.

9. A method according to Claim 8, comprising calculating, using the determined at least one parameter:
a transmission metric relating to the proportion of the transmitted optical monitoring signal that is received by the receiver; and/or
an excess noise metric relating to the noise above shot noise; and/or
a polarisation state metric relating to the relative amplitudes or intensities of the two orthogonally polarised components.

10. A method according to Claim 9, wherein calculating the metric comprises calculating a covariance matrix based on a first vector representing a series of intensities of the optical monitoring signal as transmitted along the optical channel and a second vector representing the same series of intensities of the optical monitoring signal as received at the receiver, and wherein the metric is calculated based on elements of the covariance matrix.

11. A method according to Claim 10, wherein the first vector is based, at least in part, on one or more measurements of the amplitude or intensity of at least a portion of the transmitted optical monitoring signal before it is emitted along the optical channel.

12. A method according to any of Claims 9 to 11, comprising:
determining a change in the metric based on a plurality of calculations of the metric; and
issuing an alert upon determination of the change.

13. A method according to Claim 12, wherein determining the change comprises determining whether:
the calculated metric; or
a difference between the calculated metric and one or more reference values for the metric; or
a parameter relating to a rate of change of the calculated metric; is higher or lower than a threshold value.

14. A method according to Claim 12 or 13, wherein determining the change comprises:
calculating a weighted moving average for the metric, or for a difference between the metric and one or more reference values for the metric, based on a plurality of calculations of the metric within a time window; and
determining whether the weighted moving average, or a parameter relating to a rate of change of the weighted moving average, is higher or lower than a threshold value,
preferably wherein the calculations of the metric on which the moving average is based are weighted in favour of more recent calculations in the time window, more preferably wherein the weighted moving average is an exponentially weighted moving average.

15. A method according to any of Claims 12 to 14, wherein determining the change comprises:
calculating an equally weighted moving average for the metric, or for a difference between the metric and one or more reference values for the metric, based on a plurality of calculations of the metric within a time window that are equally weighted with respect to one another; and
determining whether the equally weighted moving average, or a parameter relating to a rate of change of the equally weighted moving average, is higher or lower than a threshold value.

16. A method according to Claim 15, as dependent on Claim 14, wherein the alert is issued if it is determined that the equally weighted moving average, or a parameter relating to a rate of change of the equally weighted moving average, is higher or lower than a threshold value within a time period of it being determined that the weighted moving average, or a parameter relating to a rate of change of the weighted moving average, is higher or lower than a threshold value, or vice versa.

17. A method according to any of Claims 12 to 16, wherein determining the change comprises determining a change in a parameter relating to the Euclidian distance between a first vector representing a plurality of calculated values for the metric and a second vector representing a plurality of reference values for the metric.

18. A method according to any of Claims 12 to 17, comprising modifying communication over the optical channel upon determination of the change or issuance of the alert, preferably wherein the modifying comprises:
aborting communication over the optical channel; or
rerouting communication around the optical channel; or
modifying the type of data communicated over the optical channel.
